# EUROPÄISCHE PATENTSCHRIFT

(11) **EP 1 726 056 B1**
(45) Veröffentlichungstag und Bekanntmachung des Hinweises auf die Patenterteilung: **12.08.2009**
(21) Anmeldenummer: 05733822.0
(22) Anmeldetag: 16.03.2005
(51) Int. Cl.: H01M 8/04, H01M 8/06

(54) **BRENNSTOFFZELLENANLAGE, VERFAHREN ZUM STARTEN UND VERFAHREN ZUM ABSCHALTEN DIESER ANLAGE**
FUEL-CELL INSTALLATION, METHOD FOR ACTIVATING AND DEACTIVATING SAID INSTALLATION
INSTALLATION A PILES A COMBUSTIBLE, PROCEDE POUR METTRE EN ROUTE ET PROCEDE POUR ARRETER CETTE INSTALLATION

(30) Priorität: 17.03.2004 DE 102004013337
(43) Veröffentlichungstag der Anmeldung: 29.11.2006
(73) Patentinhaber: Viessmann Werke GmbH & Co. KG, 35107 Allendorf (DE); Sartorius Stedim Biotech GmbH, 37079 Göttingen (DE)
(72) Erfinder: BRITZ, Peter, 17033 Neubrandenburg (DE); HEIKRODT, Klaus, 35108 Allendorf (DE); MELZNER, Dieter, 37075 Goettingen (DE); REICHE, Annette, 37075 Goettingen (DE)
(74) Vertreter: Wolf, Michael
(86) Internationale Anmeldenummer: PCT/DE2005/000489
(87) Internationale Veröffentlichungsnummer: WO 2005/091411

(56) Entgegenhaltungen:
- DE-A1- 10 132 064
- DE-A1- 10 160 463
- DE-A1- 10 209 681
- DE-A1- 10 235 430
- DE-C2- 10 155 543
- US-A- 5 525 436
- US-A1- 2003 008 184
- US-A1- 2003 039 871

## Beschreibung

Die Erfindung betrifft eine Brennstoffzellenanlage gemäß dem Oberbegriff des Patentanspruchs 1, ein Verfahren zum Starten dieser Anlage gemäß dem Oberbegriff des Patentanspruchs 5 sowie ein Verfahren zum Abschalten dieser Anlage gemäß dem Oberbegriff des Patentanspruchs 7.

Eine Brennstoffzellenanlage der eingangs genannten Art ist nach der DE 101 60 463 A1 bekannt. Diese besteht aus einer Reformerstufe zur Dampfreformierung von Kohlenwasserstoffen bzw. Kohlenwasserstoffgas (insbesondere Erdgas) und Wasserdampf in Wasserstoff und weitere Reformerprodukte wie Kohlendioxid und Kohlenmonoxid. Die Reformerstufe ist dazu mit einem Gasbrenner beheizbar. Zur chemischen Aufbereitung der Reformerprodukte, d. h. insbesondere zur Umwandlung des Kohlenmonoxids in Kohlendioxid (Kohlenmonoxid ist ein sogenanntes Brennstoffzellengift) ist der Reformerstufe mindestens eine Shiftstufe nachgeschaltet. Je nach erforderlichem Reinheitsgrad der Reformerprodukte können auch zwei und mehr Gasreinigungsstufen vorgesehen sein, beispielsweise auch eine so genannte Gasfeinreinigungsstufe wie eine Methanisierungsstufe oder eine Stufe zur selektiven Oxidation (Selox-Stufe). Der mindestens einen Shiftstufe ist mindestens ein eine Vielzahl von Anoden und Kathoden mit entsprechenden Zu- und Abfuhranschlüssen aufweisender Brennstoffzellenstack zur Umwandlung des Wasserstoffs in Wasser zur Strom- und Wärmeerzeugung nachgeschaltet. Bei der DE 101 60 463 A1 handelt es sich dabei um einen sogenannten PEM-Brennstoffzellenstack, der bei einer Temperatur von etwa 70°C betrieben wird. Da der im Reformerapparat erzeugte Wasserstoff und die sonstigen Reformerprodukte mit etwa 120°C die letzte Gasreinigungsstufe verlassen, ist zwischen dieser und dem Brennstoffzellenstack ein Wärmetauscher vorgesehen, der für die erforderliche Temperaturabsenkung sorgt. Gleichzeitig ist dieser Wärmetauscher aber auch noch als Kondensatabscheider ausgebildet, um einerseits den relativ sensiblen Wasserhaushalt der Brennstoffzelle möglichst wenig zu beeinträchtigen und um andererseits anfallende Wassermengen wieder dem Gesamtprozess zuführen zu können.

Aus der DE 101 32 064 A1 ist darüber hinaus ein Verfahren zum Betrieb eines Apparats zur Erzeugung von Wasserstoff bekannt, bei dem zum Starten des Apparats dem Reformer über einen Zufuhranschluss solange zumindest für eine bestimmte Phase ausschließlich von einem Brenner vorgeheizte Luft zugeführt wird, bis der Reformer und die mindestens eine nachgeschaltete Shiftstufe Betriebstemperatur erreicht haben. Da die Funktion der Brennstoffzelle stark vom Feuchtegrad der Membran abhängig und diese insoweit zwangsläufig anodenseitig luftempfindlich ist, muss beim Anfahren der Anlage nach der letzten Shiftstufe (regelmäßig die Gasfeinreinigungsstufe) ein entsprechendes Mehrwegeventil vorgesehen sein, um eine Luftzufuhr zu den Anoden der Brennstoffzelle unterbinden zu können.

Diese Maßgabe ist an sich zwar konstruktiv ebenso einfach zu realisieren wie der der letzten Shiftstufe nachgeschaltete Wärmetauscher und Kondensatabscheider gemäß der DE 101 60 463 A1, dennoch ist der (beispielsweise am Ende des Anfahrprozesses durch Zuschalten des Reformatstromes auf die Brennstoffzelle) zwangsläufig vorhandene Temperatursprung zwischen Reformerapparat und Brennstoffzelle auch hinsichtlich des Gesamtwirkungsgrades der Anlage eher ungünstig.

Der Erfindung liegt dementsprechend die Aufgabe zugrunde, eine Brennstoffzellenanlage der eingangs genannten Art dahingehend weiter zu bilden, dass auf eine Temperaturabsenkung und Kondensatabscheidung zwischen der Shiftstufe und dem Brennstoffzellenstack verzichtet werden kann. Eine weitere Aufgabe der vorliegenden Erfindung besteht darin, die vorbeschriebene Startphase der Anlage gemäß der DE 101 32 064 A1 und auch das Anhalten der Anlage mittels Luftzufuhr sowohl konstruktiv als auch verfahrensmäßig zu vereinfachen.

Diese Aufgaben werden konstruktiv mit einer Brennstoffzellenanlage der eingangs genannten Art durch die im Kennzeichen des Patentanspruchs 1 aufgeführten Merkmale gelöst. Verfahrensmässig lösen die kennzeichenden Merkmale der Patentansprüche 5 und 7 diese Aufgaben.

Nach der Erfindung ist somit konstruktiv vorgesehen, dass der Brennstoffzellenstack als Hochtemperatur"Brennstoffzellenstack mit einer Betriebstemperatur zwischen 100°C und 200°C ausgebildet ist, dass die Shiftstufe ausgangsseitig unmittelbar und wärmetauscherfrei mit dem Zufuhranschluss der Anoden des Brennstoffzellenstacks verbunden ist und dass der Abfuhranschluss der Anoden des Brennstoffzellenstacks mit einem Luftzufuhranschluss am Gasbrenner verbunden ist.

Ein entsprechend geeigneter Hochtemperatur-Brennstoffzellenstack ist zum Beispiel nach der DE 101 55 543 C2 bekannt. Der Inhalt dieser Schrift wird hiermit auch zum Gegenstand dieser Anmeldung gemacht. Der dort beschriebene Stack ist im Prinzip eine sogenannte Polymerelektrolytmembran-Brennstoffzelle (PEM-Brennstoffzelle), allerdings mit dem Unterschied, dass die Betriebstemperatur nicht bei etwa 70°C, sondern zwischen 100°C und 200°C liegt. Erst der Einsatz dieses Stacks ermöglicht es, den Ausgang der Shiftstufe hydraulisch unmittelbar mit dem Anodeneingang der Brennstoffzelle zu verbinden, da einerseits aufgrund der erhöhten Betriebstemperatur des Stacks keine Temperaturabsenkung zwischen Reformerapparat und Brennstoffzelle erforderlich ist und da andererseits bei dieser Betriebstemperatur ohnehin kein die Membranen der Brennstoffzelle verstopfendes und somit den Stack degradierendes flüssiges Wasser anfällt.

Der vollständigkeit halber wird noch auf die DE 102 09 681 A1 verwiesen. Auch diese offenbart eine Brennstoffzellenanlage gemäß dem Oberbegriff des Patentanspruchs 1. Bei dieser wird aber bis zum Erreichen einer optimalen Gasqualität das Abgas der Shiftstufe nicht der Brennstoffzelle zugeführt. Dies erfordert ein zwischen Shiftstufe und Brennstoffzelle angeordnetes Wegeventil, das über einen Sensor und eine entsprechende Schaltung betätigt werden muss. Diese Konstellation ist somit deutlich aufwendiger und weist auch nicht die weiter unten noch aufgeführten Vorteile auf. Gleiches gilt für die DE 102 35 430 A1

Verfahrensmäßig ist zum Starten einer Brennstoffzellenanlage nach der Erfindung vorgesehen, dass in einem ersten Anfahrschritt vorgeheizte Luft durch die Reformerstufe, durch die Shiftstufe und anodenseitig durch den Brennstoffzellenstack geleitet wird, wobei die anodenseitig durch den Brennstoffzellenstack geströmte Luft dem zum Beheizen der Reformerstufe vorgesehenen Gasbrenner zugeführt wird und dass in einem zweiten Anfahrschritt die Luftzufuhr ab- und mindestens die Wasserdampfzufuhr und wahlweise auch gleich die Kohlenwasserstoffgaszufuhr eingeschaltet wird.

Verfahrensmäßig ist zum Abschalten einer Brennstoffzellenanlage nach der Erfindung vorgesehen, dass in einem ersten Abschaltschritt die Kohlenwasserstoffgaszuhr und die Wasserdampfzufuhr abgeschaltet wird und dass in einem zweiten Abschaltschritt die Luftzufuhr eingeschaltet und die Luft durch die Reformerstufe, durch die Shiftstufe und anodenseitig durch den Brennstoffzellenstack geleitet wird, wobei die anodenseitig durch den Brennstoffzellenstack geströmte Luft dem zum Beheizen der Reformerstufe vorgesehenen Gasbrenner zugeführt wird.

Auch diese Maßgaben sind erst aufgrund des erfindungsgemäßen Einsatzes einer Hochtemperatur-Brennstoffzelle, insbesondere der Brennstoffzelle gemäß der DE 101 55 543 C2, realisierbar, denn nur dann, wenn die Brennstoffzelle anodenseitig luftunempfindlich ist, kann die Luft einerseits beim Starten nicht nur zum Aufheizen des Reformers und der Shiftstufe(n), sondern auch zum Aufheizen des Stacks benutzt und andererseits beim Herunterfahren der Brennstoffzellenanlage auch zum allmählichen Abkühlen aller genannten Komponenten verwendet werden, was anodenseitig vorteilhaft sogar zur Austrocknung derselben führt.

Der Vollständigkeit halber wird noch auf die DE 102 09 681 A1 hingewiesen, aus der eine Reformeranlage bekannt ist, die mit einer Brennstoffzelle verbunden ist. Diese Anlage weist einen Reformer, einen Shiftreaktor und einen Kohlenmonoxid-Sensor auf. Außerdem sind bei dieser Anlage eine zusätzliche Katalysatorstufe, zwei Mehrwegeventile und ein Rezirkulationssystem vorgesehen. Der Fachmann erkennt, dass das Rezirkulationssystem nicht nur zur Abreicherung des Kohlenmonoxids dient, sondern, dass die Shiftstufe gleichzeitig auch die Funktion eines Wärmetauschers zwischen Reformer und Brennstoffzelle übernimmt, sprich diese Lösung nicht "wärmetauscherfrei" ist.

Andere vorteilhafte Weiterbildungen ergeben sich aus den abhängigen Patentansprüchen.

Die erfindungsgemäße Brennstoffzellenanlage einschließlich ihrer vorteilhaften Weiterbildungen gemäß der abhängigen Patentansprüche wird nachfolgend anhand der zeichnerischen Darstellung eines bevorzugten Ausführungsbeispiels hinsichtlich ihrer konstruktiven Merkmale, aber auch hinsichtlich ihres Betriebs genauer erläutert.

Es zeigt
- Figur 1: schematisch die erfindungsgemäße Brennstoffzellenanlage;
- Figur 2: als Diagram das erfindungsgemäße Startverfahren der Brennstoffzellenanlage; und
- Figur 3: als Diagramm das erfindungsgemäße Abschaltverfahren der Brennstoffzellenanlage.

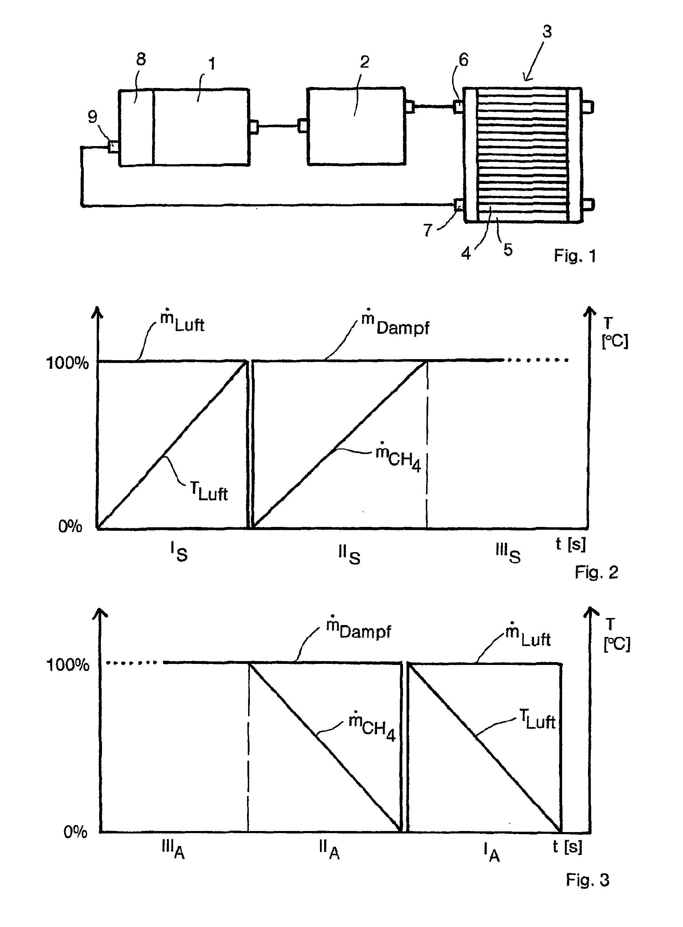

In Figur 1 ist zunächst eine bevorzugte Ausführungsform der erfindungsgemäßen Brennstoffzellenanlage schematisch dargestellt. Diese besteht aus einer Reformerstufe 1 zur Dampfreformierung von Kohlenwasserstoffen (vorzugsweise Kohlenwasserstoffgas) und Wasserdampf in Wasserstoff und weitere Reformerprodukte. Der Reformerstufe 1 ist in an sich bekannter Weise ein Gasbrenner 8 zugeordnet, um die für den Reformierungsprozess erforderliche Wärme bereit zu stellen, d. h. die Reformerstufe 1 ist mit dem Gasbrenner 8 beheizbar. Bei einer Anlage zur Hausenergieversorgung, und um eine solche handelt es sich im vorliegenden Fall bevorzugt, wird sowohl dem Brenner 8 als auch der Reformerstufe 1 im stationären Betrieb als Kohlenwasserstoffgas Erdgas (Methangas) zugeführt, das vorzugsweise einer im Haus vorgesehenen Gaszapfstelle entnommen wird.
Die Wärme des Gasbrenners 8 kann darüber hinaus auch zu anderen Heizzwecken (Hausheizung) ausgekoppelt werden.

Da bei der Dampfreformierung regelmäßig neben Wasserstoff und Kohlendioxid auch Kohlenmonoxid anfällt, ist zur chemischen Aufbereitung der Reformerprodukte, also insbesondere zur Reduzierung des Kohlenmonoxidanteils, der Reformerstufe 1 in ebenfalls an sich bekannter Weise mindestens eine Shiftstufe 2 nachgeschaltet. Je nach erforderlichem Reinheitsgrad bezüglich des Kohlenmonoxidanteils sind (wie weiter oben erwähnt) auch Anlagen mit zwei und mehr Shiftstufen (auch Gasfeinreinigungsstufe wie Methanisierungsstufe oder Selox-Stufe) bekannt.

Der mindestens einen Shiftstufe 2 ist mindestens ein, eine Vielzahl von Anoden 4 und Kathoden 5 mit entsprechenden Zu- und Abfuhranschlüssen 6, 7 aufweisender Brennstoffzellenstack 3 zur Umwandlung des Wasserstoffs in Wasser zur Strom- und Wärmeerzeugung nachgeschaltet, wobei der Stack, wie erwähnt, als sogenannte Polymerelektrolytmembran-Brennstoffzelle (PEM-Brennstoffzelle) ausgebildet ist.

Da die Gasaustrittstemperatur nach der letzten Shiftstufe 2 bei bekannten Brennstoffzellenanlage stets über 100°C beträgt, ist regelmäßig zwischen der letzten Shiftstufe 2 oder auch Gasfeinreinigungsstufe und dem Brennstoffzellenstack 3 ein Wärmetauscher, häufig zusätzlich auch ein Kondensatabscheider angeordnet.

Um diesen konstruktiven Aufwand zu verringern, ist nach der Erfindung vorgesehen, dass der Brennstoffzellenstack 3 als Hochtemperatur-Brennstoffzellenstack mit einer Betriebstemperatur zwischen 100°C und 200°C, vorzugsweise bei 160°C, ausgebildet ist. Diesbezüglich ist ferner vorgesehen, dass im Stack protonenleitende Hochtemperatur-Elektrolytmembranen verwendet werden. Diese umfassen im Sinne der DE 101 55 543 C2 mindestens ein Basismaterial und mindestens ein Dotierungsmittel, wobei das Dotierungsmittel ein Reaktionsprodukt von einer mindestens zweibasigen anorganischen Säure mit einer organischen Verbindung ist, wobei das Reaktionsprodukt eine unumgesetzte acide Hydroxylgruppe der anorganischen Säure aufweist, oder das Kondensationsprodukt dieser Verbindung mit einer mehrbasigen Säure. Diese Hochtemperatur-Elektrolytmembranen sind für den Betrieb bei diesen für PEM-Brennstoffzellen relativ hohen Temperaturen geeignet.

Darüber hinaus ist erfindungsgemäß vorgesehen, dass die Shiftstufe 2 ausgangsseitig (wie in Figur 1 deutlich dargestellt) hydraulisch unmittelbar und wärmetauscherfrei mit dem Zufuhr - anschluss 6 der Anoden 4 des Brennstoffzellenstacks 3 verbunden ist, d. h. zwischen der Shiftstufe 2 und dem Brennstoffzellenstack ist nach der Erfindung vorzugsweise lediglich ein kurzes Rohrstück (und insbesondere kein Wärmetauscher) vorgesehen, um die beiden Anlagenkomponenten hydraulisch miteinander zu verbinden.

Wie in Figur 1 deutlich dargestellt, ist ferner vorgesehen, dass der Abfuhranschluss 7 der Anoden 4 des Brennstoffzellenstacks 3 mit einem Luftzufuhranschluss 9 am Gasbrenner 8 verbunden ist. Gemäß dieser Maßgabe kann einerseits während des stationären Betriebs Anodenrestgas im Gasbrenner 8 verbrannt werden, andererseits kann darüber hinaus in der Startphase, die noch genauer erläutert wird, vorgeheizte, anodenseitig durch den Stack geströmte Luft dem Gasbrenner 8 zugeführt werden, d. h. die zum Starten vorgeheizte Luft kann energetisch sinnvoll weiterverwendet werden und wird nicht lediglich an die Umgebung abgeführt. Zur Einstellung der richtigen Verbrennungswerte ist in an sich bekannter Weise eine entsprechende Lambda-Sonde am Gasbrenner 9 vorgesehen.

Zum Starten und/oder Abschalten der Brennstoffzellenanlage ist in an sich bekannter Weise vorgesehen, dass der Reformerstufe 1 und der Shiftstufe 2 zumindest phasenweise ausschließlich Luft zugeführt wird.

Erfindungsgemäß ist darüber hinaus auf Basis der vorbeschriebenen konstruktiven Merkmale (Hochtemperatur-Brennstoffzelle, wärmetauscherfreie Verbindung zwischen Shiftstufe und Stack) vorgesehen, dass wahlweise beim Starten und/oder Abschalten der Brennstoffzellenanlage die durch die Reformerstufe 1 und durch die Shiftstufe 2 geströmte Luft auch den Anoden 4 des Brennstoffzellenstacks 3 zugeführt wird. Dies hat einerseits (beim Starten) den Vorteil, dass kein Umschaltventil zwischen Shiftstufe 2 und Brennstoffzellenstack 3 vorgesehen sein muss und dass die vom Gasbrenner 8 vorgeheizte Luft auch zum Vorheizen des Brennstoffzellenstacks 3 verwendet werden kann, andererseits (beim Anhalten der Anlage) kann aufgrund der erfindungsgemäßen Maßgabe der Brennstoffzellenstack 3 anodenseitig im Prinzip trockengefahren werden, was vorteilhaft bei einem Neustart zu genau definierten Anfahrbedingungen führt.

In Figur 2 ist eine bevorzugte Startphase und in Figur 3 eine bevorzugte Abschaltphase dargestellt. Jeweils an der linken Ordinate ist der prozentuale Anteil an Prozessgasen aufgeführt und an der rechten Ordinate die Temperatur der phasenweise zugeführten Luft. Auf der Abszisse ist die fortlaufende zeit aufgetragen.

Wie in Figur 2 dargestellt, ist vorgesehen, dass zum Starten der Brennstoffzellenanlage in einem ersten Anfahrschritt I_{S} vorgeheizte Luft *ṁ* _{Luft} durch die Reformerstufe 1, durch die Shiftstufe 2 und anodenseitig durch den Brennstoffzellenstack 3 geleitet wird. Dabei ist darüber hinaus vorteilhaft vorgesehen, dass die Temperatur T_{Luft} der zum Starten der Brennstoffzellenanlage verwendeten Luft mit zunehmender Länge des ersten Anfahrschritts zunimmt, d. h. die Anlage wird immer weiter bis zur Abschaltung der Luft vorgeheizt. Die Aufheizung der Luft erfolgt mittels des Gasbrenners 8.

Als nächstes ist vorteilhaft vorgesehen, dass in einem zweiten Anfahrschritt II_{S} die Luftzufuhr ab- und mindestens die Wasserdampfzufuhr *ṁ* _{Dampf} und wahlweise auch gleich die Kohlenwasserstoffgaszufuhr *ṁ* _{CH4} eingeschaltet wird. Gemäß Figur 2 wird die Kohlenwasserstoffgaszufuhr *ṁ* _{CH4} bis zum Beginn der dritten, stationären Phase III_{S} linear gesteigert. In der dritten Phase III_{S} beträgt die zugeführte Menge an Kohlenwasserstoffgas und Wasserdampf jeweils 100%, Luft wird nicht mehr zugeführt (wegen drohender Knallgasreaktion auch nicht möglich).

Wie in Figur 3 dargestellt, ist vorgesehen, dass zum Abschalten der stationär laufenden Brennstoffzellenanlage (Betriebsphase III_{A} = III_{S}) in einem ersten Abschaltschritt II_{A} die Kohlenwasserstoffgaszuhr *ṁ* _{CH4} und die Wasserdampfzufuhr *ṁ* _{Dampf} abgeschaltet wird, und zwar das Kohlenwasserstoffgas vorzugsweise kontinuierlich und der Wasserdampf anschließend schlagartig.

Darüber hinaus ist vorteilhaft vorgesehen, dass in einem zweiten Abschaltschritt I_{A} die Luftzufuhr *ṁ* _{Luft} eingeschaltet und die Luft durch die Reformerstufe 1, durch die Shiftstufe 2 und anodenseitig durch den Brennstoffzellenstack 3 geleitet wird. Wie aus Figur 3 ersichtlich nimmt dabei (aufgrund bewußt gedrosselter Leistung des Gasbrenners 8) die Temperatur T_{Luft} der zum Abschalten der Brennstoffzellenanlage verwendeten Luft mit zunehmender Länge des zweiten Abschaltschritts I_{A} ab.

Wie erwähnt und in Figur 1 dargestellt, ist ferner vorteilhaft vorgesehen, dass die beim Starten und/oder Abschalten anodenseitig durch den Brennstoffzellenstack 3 geströmte Luft dem zum Beheizen der Reformerstufe 1 vorgesehenen Gasbrenner 8 zugeführt wird.

Schließlich ist vorteilhaft vorgesehen (nicht dargestellt), dass zur Gewährleistung der Betriebstemperatur von 100°C bis 200°C eine Temperaturregelungseinrichtung vorhanden ist, die bei einer Betriebstemperatur oberhalb von 200°C den Brennstoffzellenstack 3 abschaltet.

### Bezugszeichenliste

- 1: Reformerstufe
- 2: Shiftstufe
- 3: Brennstoffzellenstack
- 4: Anoden
- 5: Kathoden
- 6: Zufuhranschluss
- 7: Abfuhranschluss
- 8: Gasbrenner
- 9: Luftzufuhranschluss
- I_{S}: erster Anfahrschritt
- II_{S}: zweiter Anfahrschritt
- III_{S}: stationäre Betriebsphase
- III_{A}: stationäre Betriebsphase
- II_{A}: erster Abschaltschritt
- I_{A}: zweiter Abschaltschritt

## Patentansprüche

1. Brennstoffzellenanlage, umfassend
- eine mit einem Gasbrenner (8) beheizbar ausgebildete Reformerstufe (1) zur Dampfreformierung von Kohlenwasserstoffen und Wasserdampf in Wasserstoff und weitere Reformerprodukte,
- mindestens eine der Reformerstufe (1) nachgeschaltete Shiftstufe (2) zur chemischen Aufbereitung der Reformerprodukte und
- mindestens einen der Shiftstufe (2) nachgeschalteten, eine Vielzahl von Anoden (4) und Kathoden (5) mit entsprechenden Zu- und Abfuhranschlüssen (6, 7) aufweisenden Brennstoffzellenstack (3) zur Umwandlung des Wasserstoffs in Wasser zur Strom- und Wärmeerzeugung,
**dadurch gekennzeichnet,**
- **dass** der Brennstoffzellenstack (3) als Hochtemperatur-Brennstoffzellenstack mit einer Betriebstemperatur zwischen 100°C und 200°C ausgebildet ist,
- **dass** die Shiftstufe (2) ausgangsseitig unmittelbar und wärmetauscherfrei mit dem Zufuhranschluss (6) der Anoden (4) des Brennstoffzellenstacks (3) verbunden ist, und
- **dass** der Abfuhranschluss (7) der Anoden (4) des Brennstoffzellenstacks (3) mit einem Luftzufuhranschluss (9) am Gasbrenner (8) verbunden ist.

2. Brennstoffzellenanlage nach Anspruch 1,
**dadurch gekennzeichnet,**
**dass** der Brennstoffzellenstack (3) mit protonenleitenden Hochtemperatur-Flektrolytmembranen versehen ist.

3. Brennstoffzellenanlage nach Anspruch 2,
**dadurch gekennzeichnet,**
**dass** die Hochtemperatur-Elektrolytmembranen mindestens ein Basismaterial und mindestens ein Dotierungsmittel umfassen, wobei das Dotierungsmittel ein Reaktionsprodukt von einer mindestens zweibasigen anorganischen Säure mit einer organischen Verbindung ist, wobei das Reaktionsprodukt eine unumgesetzte acide Hydroxylgruppe der anorganischen Säure aufweist, oder das Kondensationsprodukt dieser Verbindung mit einer mehrbasigen Säure.

4. Brennstoffzellenanlage nach einem der Ansprüche 1 bis 3,
**dadurch gekennzeichnet,**
**dass** zur Gewährleistung der Betriebstemperatur von 100°C bis 200°C eine Temperaturregelungseinrichtung vorgesehen ist, die bei einer Betriebstemperatur oberhalb von 200°C den Brennstoffzellenstack (3) abschaltet.

5. Verfahren zum Starten einer Brennstoffzellenanlage nach einem der Ansprüche 1 bis 4, wobei der Reformerstufe (1) und der Shiftstufe (2) beim Starten der Anlage zumindest phasenweise ausschließlich Luft zugeführt wird,
**dadurch gekennzeichnet,**
- **dass** in einem ersten Anfahrschritt (I_{S}) vorgeheizte Luft durch die Reformerstufe (1), durch die Shiftstufe (2) und anodenseitig durch den Brennstoffzellenstack (3) geleitet wird, wobei die anodenseitig durch den Brennstoffzellenstack (3) geströmte Luft dem zum Beheizen der Reformerstufe (1) vorgesehenen Gasbrenner (8) zugeführt wird, und
- **dass** in einem zweiten Anfahrschritt (II_{S}) die Luftzufuhr ab- und mindestens die Wasserdampfzufuhr und wahlweise auch gleich die Kohlenwasserstoffgaszufuhr eingeschaltet wird.

6. Verfahren nach Anspruch 5,
**dadurch gekennzeichnet,**
**dass** die Temperatur der zum Starten der Brennstoffzellenanlage verwendeten Luft mit zunehmender Länge des ersten Anfahrschritts zunimmt.

7. Verfahren zum Abschalten einer Brennstoffzellenanlage nach einem der Ansprüche 1 bis 4, wobei der Reformerstufe (1) und der Shiftstufe (2) beim Starten Abschalten der Anlage zumindest phasenweise ausschließlich Luft zugeführt wird,
**dadurch gekennzeichnet,**
- **dass** in einem ersten Abschaltschritt (II_{A}) die Kohlenwasserstoffgaszuhr und die Wasserdampfzufuhr abgeschaltet wird, und
- **dass** in einem zweiten Abschaltschritt (I_{A}) die Luftzufuhr eingeschaltet und die Luft durch die Reformerstufe (1), durch die Shiftstufe (2) und anodenseitig durch den Brennstoffzellenstack (3) geleitet wird, wobei die anodenseitig durch den Brennstoffzellenstack (3) geströmte Luft dem zum Beheizen der Reformerstufe (1) vorgesehenen Gasbrenner (8) zugeführt wird.

8. Verfahren nach Anspruch 7,
**dadurch gekennzeichnet,**
**dass** die Temperatur der zum Abschalten der Brennstoffzellenanlage verwendeten Luft mit zunehmender Länge des zweiten Abschaltschritts abnimmt.

## Claims

1. A fuel cell installation comprising
- a reformer stage (1) designed in such a way that it can be heated with a gas burner (8) for steam reforming of hydrocarbons and steam into hydrogen and further reformer products;
- at least one shift stage (2) disposed downstream of reformer stage (1) for the chemical treatment of the reformer products; and
- at least one fuel cell stack (3) disposed downstream of shift stage (2) and comprising a plurality of anodes (4) and cathodes (5) with corresponding supply and discharge connections (6, 7) for converting hydrogen into water to generate electricity and heat,
**characterized in that**
- fuel cell stack (3) is designed as high-temperature fuel cell stack having an operating temperature between 100 °C and 200 °C;
- shift stage (2) is on the output side directly connected to supply connection (6) of anodes (4) of fuel cell stack (3) without heat exchanger; and
- discharge connection (7) of anodes (4) of fuel cell stack (3) is connected to an air supply connection (9) on gas burner (8).

2. A fuel cell installation according to claim 1,
**characterized in that**
fuel cell stack (3) is provided with proton-conducting high-temperature electrolyte membranes.

3. A fuel cell installation according to claim 2,
**characterized in that**
the high-temperature electrolyte membranes comprise at least one base material and at least one doping agent, the doping agent being a reaction product of an at least dibasic inorganic acid with an organic compound, the reaction product comprising an unreacted acidic hydroxyl group of the inorganic acid, or the condensation product of this compound with a polybasic acid.

4. A fuel cell installation according to any one of claims 1 to 3,
**characterized in that**
a temperature controller is provided to ensure an operating temperature of 100 °C to 200 °C, the temperature controller shutting down fuel cell stack (3) when the operating temperature exceeds 200 °C.

5. A method for starting a fuel cell installation according to any one of claims 1 to 4, wherein reformer stage (1) and shift stage (2) are at least intermittently supplied exclusively with air during start-up of the installation;
**characterized in that**
- in a first start-up step (I_{S}), preheated air is passed through reformer stage (1), through shift stage (2), and on the anode side through fuel cell stack (3), the air that has flowed through fuel cell stack (3) on the anode side being supplied to gas burner (8) provided for heating reformer stage (1); and
- in a second start-up step (II_{S}), the air supply is shut off and at least the steam supply and optionally also the hydrocarbon gas supply is turned on.

6. A method according to claim 5,
**characterized in that**
the temperature of the air used for starting the fuel cell installation increases with increasing length of the first start-up step.

7. A method for shutting down a fuel cell installation according to any one of claims 1 to 4, wherein reformer stage (1) and shift stage (2) are at least intermittently supplied exclusively with air during shut-down of the installation;
**characterized in that**
- in a first shut-down step (II_{A}), the hydrocarbon gas supply and the steam supply are shut off; and
- in a second shut-down step (I_{A}), the air supply is turned on and air is passed through reformer stage (1), through shift stage (2), and on the anode side through fuel cell stack (3), the air that has flowed through fuel cell stack (3) on the anode side being supplied to gas burner (8) provided for heating reformer stage (1).

8. A method according to claim 7,
**characterized in that**
the temperature of the air used for shutting down the fuel cell installation decreases with increasing length of the second shut-down step.

## Revendications

1. Ensemble de piles à combustible, comprenant
- un étage de reformage (1) pouvant être chauffé au moyen d'un brûleur à gaz (8) et servant à réformer, à phase vapeur, des hydrocarbures et de la vapeur d'eau afin d'obtenir de l'hydrogène et d'autres produits de reformage.
- au moins un étage de shift-conversion (2) en aval de l'étage de reformage (1) pour ainsi procéder à un traitement chimique des produits de reformage et
- au moins empilement de piles à combustible (3) situé en aval de l'étage de shift-conversion (2) et comportant une multitude d'anodes (4) et de cathodes (5) avec les raccords d'alimentation et d'évacuation correspondants (6, 7) pour ainsi transformer l'hydrogène en eau en produisant de l'électricité et de la chaleur,
**caractérisé en ce que**
- l'empilement de piles à combustible (3) est réalisé sous forme d'un empilement de piles à combustible à haute température fonctionnant à une température comprise entre 100 °C et 200 °C,
- la sortie de l'étage de shift-conversion (2) est reliée directement et sans échangeur de chaleur au raccord d'alimentation (6) des anodes (4) de l'empilement de piles à combustible (3), et
- le raccord d'évacuation (7) des anodes (4) de l'empilement de piles à combustible (3) est relié à un raccord d'alimentation en air (9) situé sur le brûleur à gaz (8).

2. Ensemble de piles à combustible selon la revendication 1, ,
**caractérisé en ce que**
l'empilement de piles à combustible (3) est pourvu de membranes électrolytiques conductrices de protons fonctionnant à haute température.

3. Ensemble de piles à combustible selon la revendication 2,
**caractérisé en ce que**
les membranes électrolytiques fonctionnant à haute température comprennent au moins un matériau de base et au moins un agent de dopage, ledit agent de dopage étant le produit d'une réaction entre au moins un acide inorganique pouvant donner deux protons et un composé organique, le produit de ladite réaction comportant un groupe hydroxyle n'ayant pas réagi et étant issu de l'acide inorganique, ou bien le produit d'une réaction de condensation entre ledit composé et un acide pouvant donner plusieurs protons.

4. Ensemble de piles à combustible selon l'une des revendications 1 à 3, ,
**caractérisé en ce que**
un dispositif de régulation de la température est prévu afin d'assurer que la température de fonctionnement est comprise entre 100 °C et 200 °C, ledit dispositif arrêtant l'empilement de piles à combustible (3) si la température de fonctionnement est supérieure à 200 °C.

5. Procédé de démarrage d'un ensemble de piles à combustible selon l'une des revendications 1 à 4, l'étage de reformage (1) et l'étage de shift-conversion (2) étant, lors du démarrage dudit ensemble, alimentés au moins pendant une phase exclusivement en air,
**caractérisé en ce que**
- dans une première étape de démarrage (I_{S}), de l'air préchauffé est introduit dans l'étage de reformage (1), dans l'étage de shift-conversion (2) et dans le côté anodique de l'empilement de piles à combustible (3), l'air étant acheminé, après son passage à travers le côté anodique de l'empilement de piles à combustible (3), vers le brûleur à gaz (8) prévu pour chauffer l'étage de reformage (1), et
- dans une deuxième étape de démarrage (II_{S}), l'alimentation en air est arrêtée et au moins l'alimentation en vapeur d'eau et optionnellement aussi l'alimentation en hydrocarbures gazeux sont activées.

6. Procédé selon la revendication 5,
**caractérisé en ce que**
plus la première étape de démarrage dure, plus la température de l'air utilisé pour démarrer l'ensemble de piles à combustible augmente.

7. Procédé de d'arrêt d'un ensemble de piles à combustible selon l'une des revendications 1 à 4, l'étage de reformage (1) et l'étage de shift-conversion (2) étant, lors de l'arrêt dudit ensemble, alimentés au moins pendant une phase exclusivement en air,
**caractérisé en ce que**
- dans une première étape d'arrêt (II_{A}), l'alimentation en hydrocarbures et l'alimentation en vapeur d'eau sont arrêtées, et
- dans une deuxième étape d'arrêt (I_{A}), l'alimentation en air est activée et ledit air est introduit dans l'étage de reformage (1), dans l'étage de shift-conversion (2) et dans le côté anodique de l'empilement de piles à combustible (3), l'air étant acheminé, après son passage à travers le côté anodique de l'empilement de piles à combustible (3), vers le brûleur à gaz (8) prévu pour chauffer l'étage de reformage (1).

8. Procédé selon la revendication 7,
**caractérisé en ce que**
plus la deuxième étape d'arrêt dure, plus la température de l'air utilisé pour arrêter l'ensemble de piles à combustible diminue.
